(19)

**Europäisches Patentamt**

**European Patent Office**

**Office européen des brevets**

(11) **EP 4 668 171 A1**

(12) **EUROPEAN PATENT APPLICATION**

(43) Date of publication:
**24.12.2025 Bulletin 2025/52**

(21) Application number: **24182888.8**

(22) Date of filing: **18.06.2024**

(51) International Patent Classification (IPC):
**G06N 10/20** (2022.01)　　　　**G06N 10/60** (2022.01)
**G06N 20/00** (2019.01)

(52) Cooperative Patent Classification (CPC):
**G06N 10/60; G06N 10/20; G06N 20/00**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Terra Quantum AG
9000 St. Gallen (CH)**

(72) Inventors:
• **MELNIKOV, Alexey
9000 St. Gallen (CH)**
• **SAGINGALIEVA, Asel
9000 St. Gallen (CH)**
• **SENOKOSOV, Arsenii
9000 St. Gallen (CH)**

(74) Representative: **Lucke, Andreas
Boehmert & Boehmert
Anwaltspartnerschaft mbB
Pettenkoferstrasse 22
80336 München (DE)**

(54) **A METHOD FOR CONSTRUCTING A QUANTUM-CIRCUIT BASED MACHINE LEARNING MODEL**

(57) A computer-implemented method for constructing a quantum circuit-based machine learning model to estimate an output for a set of input features based on problem data, comprising receiving a quantum circuit architecture selection including a selection of a quantum circuit architecture parameter range for specifying a property of a quantum circuit layer, sampling random quantum circuits based on the quantum circuit architecture selection with a random selection of quantum circuit architecture parameters from the quantum circuit architecture parameter range, determining a circuit metric for each of the random quantum circuits, determining, based on the circuit metric meeting a corresponding metric criterion, a subset of random quantum circuits as validated quantum circuit layer candidates, training machine learning models, each comprising one of the validated quantum circuit based layer candidates; and determining an optimized set of quantum circuit architecture parameters based on a quality metric achieved by the machine learning models.

Fig. 4

**Description**

FIELD OF THE INVENTION

The present invention is in the field of quantum machine learning. More precisely, the present invention relates to simulation methods for quantum circuits, in particular for quantum machine learning and quantum optimization.

BACKGROUND

Quantum computers provide a platform of controllable quantum mechanical systems whose state and interaction can be controlled in order to perform a computation. The computation is realized by a deterministic evolution of the controllable quantum mechanical systems, and the state of the quantum mechanical systems can be measured to determine the outcome of the computation.

The quantum computer generally encodes information in so called qubits, acting as a quantum mechanical equivalent of classical bits. Qubits are physical systems whose quantum mechanical state can be (coherently) controlled and (substantially) preserved between two basis states during the time of a computation, in the following referred to as |0> and |1>. As an example, a qubit may be implemented by encoding information in the spin state of an electron, e.g. in the electron being in an "up" state or a "down" state, but may also be encoded in a polarization state of a photon, in states of a (superconducting) oscillator, in energy levels of an atom, or the like.

Control operations on these qubits are termed Quantum gates. Quantum gates can coherently act on qubits for inducing changes of the state of a single qubit (so called single-qubit gates) and for acting on multiple qubits (so called multi-qubit gates), e.g. to entangle the states of the multiple qubits, and any combination thereof. For example, a single-qubit gate may induce a rotation of the spin state of an electron by a selectable value, e.g. $\pi/2$. A multi-qubit gate may coherently act on two or more qubits, such as a coherent CNOT operation on the state of two qubits. A plurality of quantum gates can be applied to the qubits of the quantum computer in parallel or in sequence for performing a computation. Finally, the state of the qubits may be measured repeatedly after applying a sequence of quantum gates to determine the probabilities for each possible outcome of the computation.

In order to compute solutions to problems which are considered intractable on classical computers, a quantum computer can leverage the special properties of quantum mechanical states, in particular the superposition and entanglement of different quantum states, to find solutions with a comparatively low number of calculation steps or access a large internal state space.

Promising applications for near term available quantum processors, i.e. noisy intermediate-scale quantum (NISQ) devices, are variational quantum algorithms. In variational quantum algorithms, the action of the quantum gates is parametrized in terms of variational parameters, and the variational parameters may be systematically varied with the help of a classical computing resource, in a manner analogous to machine learning, e.g. by implementing a kernel method for classifying an input using a variational quantum circuit. By varying the variational parameters to extremize a cost/loss function, which attributes a cost to the output of the variational quantum circuit with respect to an optimal solution, an output of the variational quantum circuit can be "trained" to provide an optimal solution to an unseen set of inputs. In these applications, entanglement between different qubits may give access to a large internal state space to provide "quantum advantage".

SUMMARY OF THE INVENTION

However, the design of quantum gate sequences for variational quantum circuits given a machine learning problem provides a fundamental technical challenge, in that classical machine learning techniques cannot generally be used to design an efficient quantum circuit architecture. Rather, the internal state of the system underlies quantum mechanical properties, such that any optimization in principle requires a deep understanding of entanglement and state evolution of quantum mechanical systems. Even though quantum circuits can be simulated on classical hardware to evaluate different quantum circuit architecture options, the simulation is computationally expensive for larger numbers of qubits, such that trial and error methods are often inconclusive. In fact, the simulation of a single quantum circuit "layer" may be intractable on classical hardware for comparatively large numbers of qubits and/or quantum gates.

In view of this state-of-the-art, the object of the invention is to provide a computer-implemented method, computer program and system for constructing quantum circuit based machine learning models.

This object is solved by a computer-implemented method, a system and computer program according to the independent claims. The dependent claims relate to preferred embodiments.

According to a first aspect, a computer-implemented method for constructing a quantum circuit-based machine learning model to estimate an output for a set of input features based on problem data is provided. The method comprises the steps of receiving a quantum circuit architecture selection, the quantum circuit architecture selection including a selection of a quantum circuit architecture parameter range for specifying a property of a quantum circuit layer of the machine learning model, the quantum circuit layer comprising a plurality of quantum gates acting on qubits. The quantum gates comprise encoding gates for encoding an input feature in a quantum state of the qubits and variational quantum gates, whose action on the qubits is defined by variational parameters. The method further comprises sampling a plurality of random quantum circuits based on the quantum circuit architecture selection, wherein random quantum circuits are constructed based on a random selection of quantum circuit architecture parameters from the quantum circuit architecture parameter range, and determining a circuit metric for each of the random quantum circuits, wherein the circuit metric is selected from the group of Fourier expressivity, ZX-calculus derived parameter redundancy, optimal circuit depth derived from Fisher information, and a maximum qubit number estimate based on gradient variance for the random quantum circuit. The method further comprises determining, based on the circuit metric for the random quantum circuits meeting a corresponding metric criterion, a subset of random quantum circuits as validated quantum circuit layer candidates, training a plurality of machine learning models, each comprising one of the validated quantum circuit based layer candidates, and determining an optimized set of quantum circuit architecture parameters based on a quality metric achieved by the plurality of machine learning models.

The problem data may be a set of points, with each point being associated with the input features and an associated output, and the machine learning model may be tasked for a prediction for the output given a (new) set of input features. The task may be based on any regression or classification task for the set of input features and may be similar to corresponding tasks encountered in classical machine learning, such as image classification, prediction of an optimal action based on a given set of state information, or estimating a solution to a problem considered to be computationally difficult, e.g. estimating parameters of a fluid dynamics problem, satellite mission planning, traveling salesman problems, or drug response prediction, just to give some examples. The skilled person will appreciate that the target output need not be known as long as a function is provided, which enables the grading of a candidate solution of the machine learning model. For example, in a travelling salesman type problem, the output may be graded based on the distance travelled or a fuel expended to visit all destinations, such that a machine learning model may be trained without the correct answer being recorded in the problem data. However, in many applications, the correct output may be known from the problem data, and the output may be graded based on a distance metric of the candidate solution from the machine learning model and the target output, e.g. the mean squared error or another cost function.

The quantum circuit-based machine learning model comprises the quantum circuit layer as a variational quantum circuit specifying the application of a plurality of quantum gates to a set of qubits, wherein encoding gates encode the set of input features into the quantum state of the qubits, and variational quantum gates can modify the quantum state of the qubits based on a corresponding set of variational parameters quantifying the action of the variational quantum gates.

As part of the machine learning model, the quantum circuit layer accepts the set of input features, or a (set of) value(s) derived therefrom to produce an output of the quantum circuit layer, which may correspond to the output in problem data or may be used by the machine learning model to produce the output.

The quantum circuit layer may be defined in terms of a quantum circuit architecture, e.g. including a number of qubits as well as an arrangement of encoding gates, variational quantum gates and multi quantum gates to form the variational quantum circuit, optionally in terms of a specific hardware implementation. The quantum circuit layer may further include the variational parameters or any parametrization or implementation parameters thereof. The machine learning model may further define how the set of input features is encoded through the action of the encoding gates in the quantum state of the qubits, e.g. based on a chosen encoding strategy and/or scaling functions, and may further define how a (measured) candidate output of the variational quantum circuit is transformed towards the output of the quantum circuit layer.

In some examples, the quantum circuit architecture selection comprises an arrangement of quantum gates in the quantum circuit layer parametrized by the quantum circuit architecture parameters.

A variational quantum circuit may generally comprise a plurality of qubits, whose quantum states may be manipulated by the application of quantum gates applied in sequence or in parallel to single qubits and/or multiple qubits.

The qubits can be initialized into an initial state, such as the ground state of each qubit. In some embodiments, after initialization of the qubits into their ground states, superposition states of each qubit in the qubit register are prepared, e.g. via the application of Hadamard gates.

Subsequently, a plurality of quantum gates may be applied to the qubits to transform their state towards an output state. In variational quantum circuits, the action of at least some of the quantum gates in the variational quantum circuit is parametrized, such that the measured output is a function of variational parameters parametrizing variable actions of the (variational) quantum gates. The combined action of the (at least partially parametrized) quantum gates may be termed a variational quantum network, as the operating principle may be similar to the operation of a neural network.

Further, in the variational quantum circuit, at least one quantum gate is used as an encoding gate, wherein the action of the encoding gate is based on the set of input features, e.g. provided as an input feature vector. For example, a value of the input feature vector may be encoded into the qubit by rotating the state of one qubit proportional to the value of the input feature vector through a single qubit rotation.

Two- or multi-qubit gates may create superposition states between the qubits, such as to harness the "quantum advantage" provided by the quantum hardware. For example, when the variational quantum circuit is implemented in a quantum device based on a trapped ion system, the states of different ions in the trapped ion system may be coupled through a joint excitation, e.g. mediated via the Molmer-Sorensen interaction. As another example, pairs of qubits in the qubit register may be entangled via a (tunable) nearest neighbor interaction or exchange of a quantum particle, in order to implement a two-qubit gate, such as a CNOT gate.

In some examples, the variational quantum circuit may be defined in terms of layers of quantum gates, which may act on the qubits to link the qubits in the qubit register.

A layer of quantum gates may comprise a cumulative action of a plurality of coherent operations on the state of the qubits in the qubit register. The cumulative action of the coherent operations in one layer should generally act on all qubits of the qubit register which are involved in the computation, or in other words, a layer of quantum gates should directly affect the state of all qubits in the qubit register. Each layer should comprise at least one multi-qubit gate and at least one variational quantum gate (which in principle could be the same gates).

The variational quantum circuit may generally be comprised of a series of trainable layers comprising single- and 2-qubit quantum gates (e.g. Pauli rotation gates (RX,RY,RZ), Hadamard, CNOT), interlaced with encoding gates, e.g. made up of Pauli rotation gates.

The subsequent application of a plurality of layers of quantum gates to the qubits may then form the variational quantum circuit/network, with the variational quantum circuit being parametrized by variational parameters for each layer.

The layers may contain the same types of quantum gates and may be applied sequentially to the qubit register. For example, each layer may feature the same architecture of quantum gates while different elements of the variational parameters may apply to the variational gates of the layer. In other words, the layers may feature the same quantum gate architecture, but the action of the quantum gates on the qubits in each layer may differ based on the variational parameters.

After the layers of quantum gates have acted on the qubits, the qubits can be measured to obtain a characteristic outcome of the variational quantum circuit with respect to the known initial state. The outcome of the quantum mechanical computation may be linked to the output in the problem data via the computational basis states of the qubits. The computational basis states may be orthogonal basis states of the Hilbert space spanned by the tensor product of the basis states of each qubit. In an implementation of the variational quantum circuit in quantum hardware, the output is generally obtained through a measurement of output states of the qubits involved in the execution of the variational quantum circuit, e.g. a projective measurement of the qubit states onto some basis, e.g. the "Z"-basis.

Initial variational parameters for the variational quantum gates can encode an initial (random) guess, and the outcome of the evaluation of the variational quantum circuit with the variational parameters can be measured (repeatedly) to determine a corresponding output. Based on the output, a cost function may be classically evaluated to attribute a cost to the output, or in other words, a measure is calculated of how good the output is.

Usually, the variable parameters are iteratively updated using a feedback-loop implemented in a classical processing system, e.g. based on an (iterative) optimization algorithm, such that the output approaches an optimal solution, i.e. an optimal output given the problem data, making the overall method including the operation of the variational quantum circuit and its control/optimization a hybrid quantum-classical algorithm.

By training the system, the variational parameters may be systematically varied in an iterative manner, such that the machine learning model approximates the output of the problem data.

Training the quantum circuit-based machine learning model may generally comprise determining a loss associated with an output of the machine learning model for a given input feature vector of the problem data based on some quality measure for the output, e.g. the mean squared error with respect to an output recorded in the problem data, and determining an update to the variational parameters of the quantum circuit layer based on the loss.

The variational parameters may be updated with known techniques employed in classical machine learning, such as gradient based optimization algorithms, e.g. stochastic gradient descent or adaptive moment estimation, or gradient free optimization, such as simulated annealing. Preferably, the optimization algorithm is gradient based, and the method may comprise determining a gradient of the variational parameters with respect to the loss attributed to the candidate output by the loss function, e.g. based on determining partial derivatives of the loss function with respect to the variational parameters, which may be determined by executing the variational quantum circuit with shifted variational parameters.

The quantum circuit architecture selection can include a class of a quantum circuit layer, such as a characteristic sequencing of encoding gates, variational quantum gates, and entangling gates for entangling the states of a plurality of qubits based on a set of quantum circuit architecture parameters. The quantum circuit architecture parameters can include the number of qubits, the number of layers of quantum gates (or depth of the quantum circuit layer), the gate type used for encoding and/or variational quantum gates (such as X, Y, or Z rotations), the measurement basis, the number of input features, and the encoding strategy, such as a data re-uploading scheme.

The quantum circuit architecture selection may be defined by a user and submitted as part of the method, or a user may select a quantum circuit architecture from a provided list of quantum circuit architectures, as part of a guided human machine interaction.

For at least one of the quantum circuit architecture parameters, the quantum circuit architecture selection includes a quantum circuit architecture parameter range, which may be provided as upper and lower limits of the quantum circuit architecture parameter, or may be provided as a starting value, e.g. by a user, to be modified within a specified or default range.

In some examples, the quantum circuit architecture parameter range is based on a quantum circuit architecture parameter selection of a user, wherein the method comprises receiving an end point of the quantum circuit architecture parameter range and/or generating the quantum circuit architecture parameter range based on a selected quantum circuit architecture parameter or a default quantum circuit architecture parameter for the quantum circuit architecture selection.

In some examples, the method comprises receiving a plurality of quantum circuit architecture parameter ranges as part of the quantum circuit architecture selection.

In some examples, the quantum circuit architecture parameter range comprises one or more quantum circuit architecture parameters selected from the group of qubit number, variational quantum circuit depth, number of input features, and number of measured qubits for constructing an output of the variational quantum circuit.

The qubit number may specify the number of qubits of the quantum circuit layer on which the quantum gates of the quantum circuit layer act. The variational quantum circuit depth may specify a number of variational quantum gate layers, wherein each of the layers may comprise a variational quantum gate and an entangling gate, in particular for each qubit. Depending on the class and/or feature encoding scheme specified for the quantum circuit layer, each of the layers may further comprise an encoding gate, e.g. as part of a data re-uploading scheme. The number of input features may be based on the architecture of the machine learning model and/or the problem data. Depending on the class of the quantum circuit layer, the input features may be encoded in parallel, sequentially or using multiple quantum circuit layers given a certain qubit number. For example, if the number of input features is greater than the number of qubits, the quantum circuit layer may comprise a plurality of parallel variational quantum circuits, which are evaluated independently and the respective (e.g. measured) outputs may be combined, e.g. with a further (e.g. classical) machine learning model, or the different input features may be encoded sequentially, e.g. in different layers of quantum gates of the same quantum circuit.

Based on the quantum circuit architecture selection, the method samples a plurality of random quantum circuits, wherein the quantum circuit architecture parameters are randomly selected from the quantum circuit architecture parameter range(s), e.g. to construct quantum circuit layers with different depth and/or qubit number. Sampling the plurality of random quantum circuits may be equal to determining quantum circuit architecture parameter(s) from the quantum circuit architecture parameter range(s) and constructing a corresponding random quantum circuit for each set of randomly determined quantum circuit architecture parameters based on quantum circuit architecture of the quantum circuit architecture selection.

For each of the random quantum circuits, the method determines circuit metrics for evaluating the suitability of the quantum circuit layer for the given machine learning task based on the problem data, wherein the circuit metric is selected from the group of Fourier expressivity, ZX-calculus derived parameter redundancy, optimal circuit depth derived from Fisher information, and a maximum qubit number estimate based on gradient variance for the random quantum circuit. Generally, any one or a combination of the circuit metrics may be used to assess the suitability of the quantum circuit layer for efficiently mapping the output of the problem data to the input features, based on the selected quantum circuit architecture parameters. For example the user may select the circuit metrics used to evaluate the random quantum circuits, and the method may comprise receiving, from a client, a selection of circuit metrics for evaluating the random quantum circuits.

In some examples, the method further comprises, returning, based on the circuit metric for the quantum circuit architecture selection, a recommendation to a user to adjust the quantum circuit architecture parameter range.

The circuit metrics may be displayed to a user of the system, and alerts and/or recommendations based on the circuit metrics may be presented. Thus, the computer implemented method may guide a user select an optimal quantum circuit architecture.

In some examples, the method comprises determining a plurality of circuit metrics, in particular all of the circuit metrics, from the group of Fourier expressivity, ZX-calculus derived parameter redundancy, optimal circuit depth derived from Fisher information, and a maximum qubit number estimate based on gradient variance for the random circuit and/or a set of default quantum circuit architecture parameters for the quantum circuit architecture selection.

In addition, the method comprises skipping random quantum circuits, for which the quantum metrics do not meet a metric criterion. For example, if the number of qubits exceeds an optimal qubit number determined based on the circuit metrics, the random quantum circuit may be discarded as an inefficient quantum circuit. Similarly, if the number of variational quantum layers deviates from an optimal variational quantum circuit depth determined based on the Fisher information matrix of the random quantum circuit for the problem data by a certain margin (e.g. if the depth is too low/too high or lower or higher than the optimal variational quantum circuit depth), the circuit may equally be discarded for the purposes of training the quantum circuit layer.

The quantum circuit layer may further be expressed with a (partial) Fourier series representation to estimate the expressiveness of the random quantum circuit. Generally, the output of a parameterized (variational) quantum circuit is equivalent to a truncated Fourier series, and the coefficients of the Fourier series may be considered to quantify the expressivity of the quantum circuit.

In some examples, determining the Fourier expressivity comprises determining Fourier coefficients of a partial Fourier series representation for the random quantum circuit, and determining a number of the Fourier coefficients above an expressivity threshold for the Fourier coefficients.

For example, the expressivity threshold may be a comparatively small number, such as $10^{-1}$, $10^{-2}$, or $10^{-3}$, and the number of the Fourier coefficients which meet or exceed the threshold may be counted to determine a corresponding circuit metric. In some examples, the fraction of Fourier coefficients which meet or exceed the threshold is the circuit metric, wherein the metric criterion for discarding the random quantum circuit may be that the fraction is smaller than a Fourier coefficient threshold, such as 50%, 65%, or 80%.

As a further circuit metric, ZX-calculus may be used to investigate redundancies in the variational quantum circuit.

ZX-calculus can be applied by replacing quantum tensors with so-called "spiders", nodes on a graph with edges that connect them. These spiders come in two flavors, e.g. a light or green-colored spider that represents tensors in the Z-basis ($|0>$, $|1>$) and a dark or red-colored spider that represents tensors in the X-basis ($|+>$, $|->$). ZX-diagrams can be simplified and reduced with the language's graphical rewrite rules based on the underlying quantum operations. For example, repetitions of Pauli rotations sum together to form one Pauli rotation with an angle equal to the sum of its parts. This can be translated into ZX-calculus as a specific instance of the more general rule of "fusing" spiders, where nodes of the same color combine and sum their angles.

In some examples, determining the ZX-calculus derived parameter redundancy comprises determining a ZX-calculus representation for the random quantum circuit, executing a circuit simplification algorithm on the ZX-calculus representation for obtaining a reduced ZX-graph for the random quantum circuit, and determining a number of unique parameters in the reduced ZX-graph.

The number of unique parameters in the reduced ZX-graph can highlight redundancies in the quantum circuit layer. The circuit criterion for the ZX-calculus derived parameter redundancy may be that a fraction of the effective number of the variational parameters in the reduced ZX-graph and the original number of variational parameters is smaller than a corresponding threshold fraction, such as 50%, 65%, or 80%.

As a further circuit metric, the Fisher information matrix of the random quantum circuit may be used to investigate an efficiency of the selected circuit depth.

In some examples determining the optimal circuit depth derived from Fisher information comprises determining the Fisher information matrix for one of the random quantum circuit instantiated with randomly selected variational parameters for a subset of the problem data, while varying a variational quantum circuit depth of the random quantum circuit.

Given one of the random quantum circuits, the quantum circuit architecture parameters can be held fixed except for the variational quantum circuit depth, e.g. the number of layers of variational quantum gates of the random quantum circuit, which is varied to construct related random quantum circuits with different depths. For the random quantum circuit, variational parameters are selected randomly to determine all gate actions of the (related) random quantum circuit. The Fisher information matrix is subsequently evaluated for the problem data or a subset thereof (e.g. parts of the points of the problem data). The Fisher information matrix can be represented as:

$$F(\boldsymbol{\theta}) = \mathbb{E}_{\{x_i, y_i\}}[\boldsymbol{\nabla}_{\boldsymbol{\theta}} \log(P) \boldsymbol{\nabla}_{\boldsymbol{\theta}} \log(P)^T] \tag{1}$$

and can provide information on the joint probability, P (y, x|$\theta$), which takes into account the combined likelihood of y (output) and x (set of input features) given $\theta$ (variational parameters).

The properties of the Fisher information matrix for the different related random quantum circuit may indicate whether the additional provision of more variational parameters effectively increases the trainability of the machine learning model.

In some examples, the method comprises determining a rank of the Fisher information matrix for multiple depths of the random quantum circuit and determining the depth at which the rank of the Fisher information matrix saturates.

The rank may be the dimension of the vector space generated (or spanned) by its columns and can be considered a measure of the "nondegenerateness" of the system of linear equations and linear transformation encoded by the Fisher information matrix. When the rank of the Fisher information matrix saturates, further increases of the variational quantum circuit depth may not increase the effective ability of the random quantum circuit to approximate the set of input features. Accordingly, if the depth of the random quantum circuit exceeds the depth at which the rank of the Fisher information matrix saturates, the random quantum circuit may be rejected as inefficient.

In some examples, the method further comprises determining an eigenspectrum of the Fisher information matrix, and determining, based on a frequency of smallest eigenvalues in a bin of the eigenspectrum, an optimal depth of the random quantum circuit.

For example, the eigenvalues of the Fisher information matrix may be binned into 10 bins, and the size of the first (smallest value) bin or second bin may be evaluated for different variational quantum circuit depths to estimate the optimal depth for training the quantum circuit layer given the other quantum circuit architecture parameters.

For example, the method may comprise determining the depth of the random quantum circuit for which the first bin is minimal, or a degeneracy of the eigenvalues may be minimal, indicating optimal trainability. As another example, the method may comprise determining the depth of the random quantum circuit for which the second bin drops below a threshold value, such as 10%, and determining a maximum depth of the random quantum circuit based on said depth.

The random quantum circuits may further be assessed based on the optimality of the number of qubits given the problem data. Variational quantum circuits can suffer from the barren plateau problem, characterized by a loss landscape with sharply defined optima.

In some examples, determining the maximum qubit number estimate based on gradient variance comprises randomly sampling the gradient of the variational parameters for the random quantum circuit multiple times and for a plurality of numbers of qubits, and determining the maximum qubit number at which the variance of the gradient of the variational parameters is at or below a pre-determined weight gradient variance threshold.

The variational parameters for the random variational quantum circuits may be randomly selected, and the gradient of the cost function may be assessed for different sets of random variational parameters. The variance of the gradient may be evaluated for different number of qubits, with the other quantum circuit architecture parameters fixed, to estimate a scaling of the gradient as a function of the number of qubits.

In some examples, determining the maximum qubit number at which the variance of the gradient of the variational parameters is at or below a pre-determined weight gradient variance threshold comprises determining the variance of the gradient of the variational parameters for the random quantum circuit for the plurality of numbers of qubits, and fitting the logarithm of the variance with a regression model to determine the maximum qubit number at which the variance of the gradient of the variational parameters is at or below a pre-determined weight gradient variance threshold.

The regression model may be a linear regression model. If the scaling is exponential, the quantum circuit architecture may be susceptible to barren plateaus. Based on the fit, the method may estimate at which qubit number the variance of the gradient of the variational parameters drops below the gradient variance threshold. The gradient variance threshold may be a comparatively small number, such as a gradient variance threshold smaller than $10^{-3}$ or smaller than $10^{-6}$.

The gradient of the variational parameters may be estimated based on a pre-determined set of numbers of qubits to minimize computational load, e.g. for a plurality of qubits numbers smaller than 10, e.g. estimated for 3, 4, 5, and 6 qubits.

Based on a subset of the random quantum circuits filtered based on the circuit metric, the method may proceed to a training of plurality of machine learning models to assess a quality metric achieved by the machine learning models given the problem data. An initial training may be based on a subset of the problem data.

In some examples, the plurality of machine learning models is trained based on a subset of the problem data prior to determining the optimized set of quantum circuit architecture parameters.

In some examples, hyperparameters for training the machine learning models may be optimized through a hyperparameter optimization algorithm prior to determining the optimized set of quantum circuit architecture parameters. For example, the machine learning model achieving the highest quality metric (e.g. lowest MSE loss) after the hyper parameter optimization may be determined as the machine learning model with an optimized set of quantum circuit architecture parameters.

In some examples, the method further comprises training a machine learning model with the optimized set of quantum circuit architecture parameters based on the problem data.

The method may be implemented using a processing system, which may comprise a single processing unit or may comprise a plurality of processing units, which may be functionally connected. The processing units may comprise a microcontroller, an ASIC, a PLA (CPLA), an FPGA, or other processing device, including processing devices operating based on software, hardware, firmware, or a combination thereof. The processing devices can include an integrated memory, or communicate with an external memory, or both, and may further comprise interfaces for connecting to sensors, devices, appliances, integrated logic circuits, other controllers, or the like, wherein the interfaces may be configured to receive or send signals, such as electrical signals, optical signals, wireless signals, acoustic signals, or the like.

The quantum circuit layer may be evaluated on classical processing (simulation) resources and/or on quantum hardware, e.g. as part of training the plurality of machine learning models refined as part of the method. As a result of the method, the executed quantum circuit layers may be selected from a more suitable subset of quantum circuit architectures adapted to the particulars of variational quantum circuit based processing.

The processing system may comprise a server for interacting with a client device, such as to receive problem data and selections, but any processing may be distributed on a plurality of processing units, which may comprise processing units with access to quantum computation hardware.

According to a second aspect, the invention relates to a system comprising

The system may implement the method according to the first aspect or any combination of their embodiments. In particular, the system according to the second aspect may also benefit from any feature of the examples of the first aspect.

According to a third aspect, the invention relates to a non-transitory medium comprising machine-readable instruction, which, when executed by a processing system, implement a method according to the first aspect and/or a system according to the second aspect.

DETAILED DESCRIPTION OF EMBODIMENTS

The features and numerous advantages of the method and system according to the present invention will best be understood from a detailed description of preferred embodiments with reference to the accompanying drawings, in which:

Fig. 1    schematically illustrates an example of a hybrid quantum-classical computation system for implementing and driving a variational quantum circuit;

Fig. 2    schematically illustrates another example of a hybrid quantum-classical computation system for implementing and driving a variational quantum circuit;

Fig. 3    illustrates a flow diagram of a method for constructing a quantum circuit based machine learning model according to an example;

Fig. 4    illustrates another flow diagram of a method for constructing a quantum circuit based machine learning model according to an example;

Figs. 5A, 5B    illustrate an example of the gradient variance for a variational quantum circuit as a function of the number of qubits;

Figs. 6A, 6B    illustrate example ZX-calculus representations of the same variational quantum circuit prior to and after algorithmic rewriting, respectively; and

Figs. 7A-7F    illustrate an example of a quantum circuit (Fig. 7A) and circuit metrics based on the Fisher information matrix for said quantum circuit for different variational quantum circuit depths.

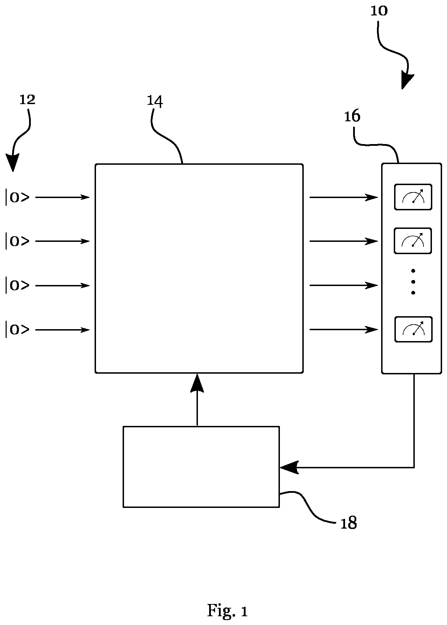

Fig. 1 schematically illustrates an example of a hybrid quantum-classical computation system 10 for implementing and driving a variational quantum circuit, according to a schematic quantum circuit diagram. The schematic quantum circuit diagram depicts an evolution of quantum states from left to right for an exemplary number of computation qubits, wherein control operations on the qubits can be arranged along lines of qubit state evolution to indicate an architecture or time-sequence associated with the quantum circuit. The skilled person will appreciate that additional coherent operations may be included as part of the quantum circuit, and the quantum circuit may be extended to an arbitrary number of qubits. Further, although reference may be made to specific control operations in the following description, the skilled person will appreciate that different control operations may be used to implement the system and methods of the present disclosure, e.g. depending on the physical representation of the qubits.

The illustrated system 10 of Fig. 1 comprises a qubit register 12 comprising a plurality of computation qubits. A plurality of quantum gates 14 may act on the computation qubits of the qubit register 12 to perform a computation/controlled evolution, wherein variable actions of the plurality of quantum gates 14 may be parametrized by variational parameters. The outcome of the computation may be measured by a measurement sensor 16 which projects the states of the computation qubits onto the computational basis states of the hybrid quantum-classical computation system 10. The outcome can be received by a control system 18.

The control system 18 may be configured to repeatedly perform a computation sequence. The computation sequence may comprise initializing the computation qubits of the qubit register 12 before each computation, such as into the ground state of each computation qubit, e.g. to form an initial state of the computation qubits of $| oo...o>$. The initialization of the computation qubits into their respective ground state may in some examples comprise a relaxation process, and the initialization of the computation qubits may not require active control of the computation qubits.

The control system 18 may then apply the plurality of quantum gates 14 to the computation qubits of the qubit register 12 to drive a coherent evolution of the computation qubits. The control system 18 may optionally produce superposition states of all computation qubits, e.g. by applying a Hadamard gate to each of the computation qubits, and may subsequently apply the plurality of quantum gates 14 including variational quantum gates with the variable actions.

In variational quantum circuits, the action of at least some of the quantum gates in the variational quantum circuit is parametrized, such that a measured output of the computation qubits is a function of variational parameters parametrizing variable actions of the variational quantum gates, such as a rotation angle. The combined action of the at least partially parametrized quantum gates may be termed a variational quantum circuit.

Following the coherent evolution, the state of the computation qubits in the qubit register 12 may be measured with the sensor 16. The measurement sensor 16 may be a plurality of single qubit state detectors for measuring the state of each computation qubit following the evolution according to the plurality of quantum gates 14. Repeating the measurement may allow determining the probability of each measurement outcome and the result may be employed for assigning an output label or candidate output to an input vector of features. On the basis of the measured output, the control system 18 can classically calculate an "energy"/"cost"/"loss" of the output with a cost/loss function based on a machine learning task. The machine learning task may be specified according to a function, which assigns a loss to the measured output or the output derived therefrom, or may be specified according to pairs of sample input vectors of features and target outputs, e.g. as points of (training) problem data representing a machine learning function, wherein the loss may be based on a difference between the estimated output and the target output.

Conventionally, the control system 18 may repeat the computation sequence with adjusted variable actions based on the outcome, such as to progressively improve the quality of an output label associated with the measured outcome. For example, the control system 18 may repeat the computation sequence with adjusted operation parameters for the variational quantum gates in order to determine a gradient or energy landscape associated with the plurality of quantum gates 14 from the measured outcomes and may update the variational parameters based on the estimated gradient in order to progressively adjust the variational quantum circuit towards an improved solution.

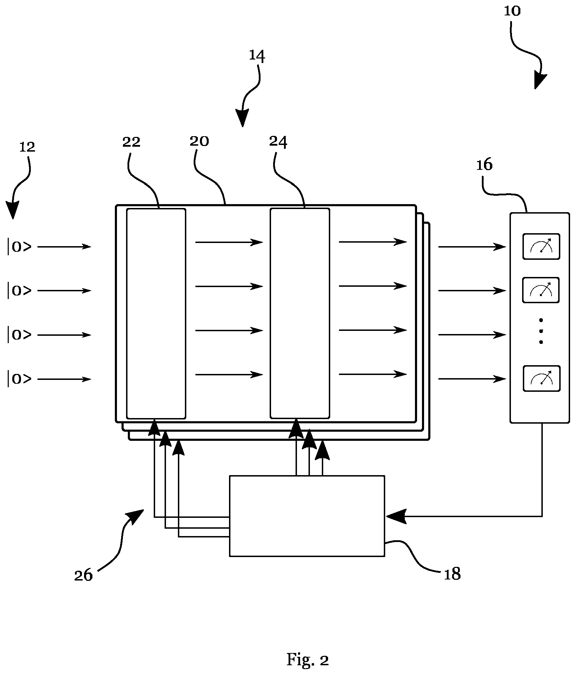

Fig. 2 illustrates another example of a hybrid quantum-classical computation system 10 for implementing and driving a variational quantum circuit. The system 10 comprises a qubit register 12 comprising a plurality of computation qubits. A plurality of quantum gates 14 are arranged in layers of quantum gates 20, which may act on the computation qubits of the qubit register 12 in sequence to perform a computation. Each layer of quantum gates 20 can comprise an encoding layer 22 and a variational layer 24, wherein the variational layer 24 comprises a plurality of variational quantum gates whose actions may be parametrized by different variational parameters in each layer of quantum gates 20. The encoding layer 22 comprises a plurality of encoding gates whose action is parametrized based on values of an input vector of features to be labeled according to a given machine learning task. The encoding layer 22 in different layers of quantum gates 20 may be based on different sub-vectors 26 of the input vector of features, such that different layers of quantum gates 20 may encode different values of the input vector of features into the states of the computation qubits. However, in some examples, different layers of quantum gates 20 may encode the same features or the same features multiplied by different scaling factors, such as to effectively fit a higher Fourier series to the respective features of the input vector as part of a data-reuploading scheme. Each layer of quantum gates 20, e.g. as part of each variational layer 24, may comprise multi-qubit gates for entangling the states of different computation qubits of the qubit register 12, such as a plurality of CNOT gates, as entangling gates for entangling quantum states of at least two qubits of the computation qubits.

The application of the variational layer 24 to the states of the computation qubits 24 after the action of the encoding layer 22 may prepare the quantum states of the computation qubits for the encoding of a different feature of the input vector of features in the next layer of quantum gates 20, or for encoding the same feature multiple times, optionally with a scaling factor applied to the value of the feature.

To encode the values of the input vector of features into the quantum Hilbert space, the "angle embedding" method can utilized, which involves rotating the respective qubit around an axis, such as the Z-axis (it can also be the X or Y-axis) on the Bloch sphere by an angle proportional to a value corresponding the respective feature.

The subsequent application of a plurality of layers of quantum gates to the qubits may form the variational quantum circuit, with the variational quantum circuit being parametrized by variational parameters for each layer. Each layer of quantum gates may comprise an entangling gate for each of the computation qubits, such as to create a superposition state of the computation qubits. In some examples, each layer of quantum gates is configured to entangle the states of each computation qubit with at least one other qubit of the computation qubits. In some examples, each layer comprises a plurality of entangling gates to create a superposition state of all the computation qubits.

The outcome of the computation may be measured by a measurement sensor 16 after all layers of quantum gates 20 have acted on the computation qubits, wherein the measurement sensor 16 may project the states of the computation qubits onto the computational basis states of the hybrid quantum-classical computation system 10. Based on a measured output, which may be determined based on a measurement outcome obtained with the measurement sensor 16 or based on the measurement outcomes obtained with the measurement sensor 16 in multiple repetitions of applying the variational quantum circuit to the computation qubits, the control system 18 may determine an output for labeling the input vector of features according to the given machine learning task. Measuring the computation qubits multiple times may allow determining probabilities of measuring each of the computational basis states of the qubits for the quantum state produced by the application of the plurality of quantum gates.

The variational parameters should be optimized for predicting an optimal output for the input vector of features in view of the machine learning task according to a training algorithm, which may be an iterative process of updating the variational parameters according to an estimated gradient associated with the plurality of quantum gates 14.

However, the selection of an optimized variational quantum circuit architecture for a given set of problem data (and an associated machine learning task) may be non-trivial.

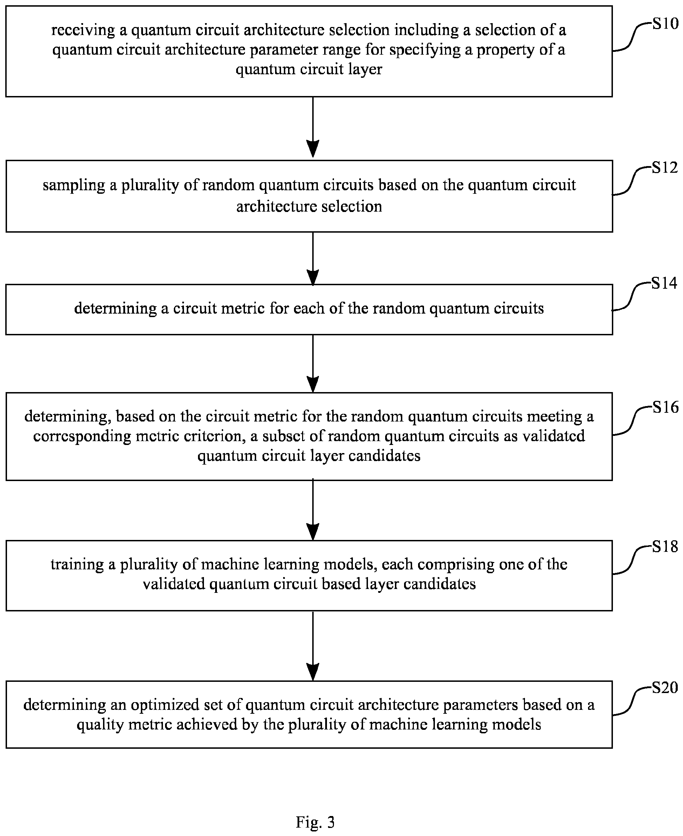

Fig. 3 illustrates a flow diagram of a method for constructing a quantum circuit-based machine learning model to estimate an output for a set of input features based on problem data. The method comprises the steps of receiving a quantum circuit architecture selection (S10), the quantum circuit architecture selection including a selection of a quantum circuit architecture parameter range for specifying a property of a quantum circuit layer of the machine learning model, the quantum circuit layer comprising a plurality of quantum gates acting on qubits. The quantum gates comprise encoding gates for encoding an input feature in a quantum state of the qubits and variational quantum gates, whose action on the qubits is defined by variational parameters. The method further comprises sampling a plurality of random quantum circuits based on the quantum circuit architecture selection (S12), wherein random quantum circuits are constructed based on a random selection of quantum circuit architecture parameters from the quantum circuit architecture parameter range, and determining a circuit metric for each of the random quantum circuits (S14), wherein the circuit metric is selected from the group of Fourier expressivity, ZX-calculus derived parameter redundancy, optimal circuit depth derived from Fisher information, and a maximum qubit number estimate based on gradient variance for the random quantum circuit. The method further comprises determining, based on the circuit metric for the random quantum circuits meeting a corresponding metric criterion, a subset of random quantum circuits as validated quantum circuit layer candidates (S16), training a plurality of machine learning models, each comprising one of the validated quantum circuit based layer candidates (S18), and determining an optimized set of quantum circuit architecture parameters based on a quality metric achieved by the plurality of machine learning models (S20).

In some examples, a user of a system for implementing the method, e.g. connected to a processing system implementing the method as a client, may provide problem data to a server. The problem data may be pre-processed, e.g. by filtering and/or interpolating data points, and may be analyzed, e.g. in terms of the feature correlation and joint distribution graphs of features. After providing a dataset, the user is given the opportunity to change the data type for each column in the data set, e.g. to choose which of the features in the data set to select as input and output features as problem data for training the machine learning model. For example, the user may provide a selection of an input set of features and a target output, which may be a subset of the features available in the original data set. In some examples, a user may select a normalization method for normalizing features in the problem data.

The user may further select a quantum circuit architecture to be used as part of a machine learning model for approximating the problem data. In some examples, the server may provide a plurality of options for layers of the machine learning model, and the user may select a quantum circuit architecture based on the options. In some examples, machine learning model may be constructed based on a plurality of layers, such as a plurality of quantum circuit layers and/or a plurality of classical machine learning model layers, which may be combined, e.g. in parallel or sequentially, for constructing a machine learning model. However, in the following a machine learning model including a single quantum circuit based machine learning model layer will be considered.

Subsequently, the quantum circuit architecture may be assessed in view of the problem data in terms of quantum circuit metrics including Fourier analysis, ZX-calculus, Fisher information, and Gradient analysis.

Fourier analysis may comprise determining Fourier coefficients of a representation of the quantum circuit layer for assessing the expressiveness of the machine learning model. The more Fourier coefficients are non-zero, the more expressive the machine learning model may be. Generally, the output of a parameterized quantum circuit is equivalent to a truncated Fourier series. For a feature vector of length N, the Fourier series as a function of the feature vector x and trainable parameters $\theta$ is:

$$f_\theta(\mathbf{x}) = \sum_{\omega_1 \in \Omega_1} \cdots \sum_{\omega_N \in \Omega_N} c_{\omega_1 \ldots \omega_N}(\theta) e^{-i\omega \cdot \mathbf{x}}, \tag{2}$$

where $\omega_i \in \{-d_i, ..., 0, ..., d_i\}$. In other words, the number of terms in the Fourier series is one more than twice the number of times an input was placed in the circuit, *d*. The expressivity of the function $f_\theta(x)$ may be assessed by sampling over a uniform distribution of random values for each variational parameter $\theta$ from $[0, 2\pi]$ and by sampling equidistant input feature (x) values with a sampling frequency of *d*.

ZX-calculus is a graphical language that replaces circuit diagrams with ZX diagrams, which can be used to investigate quantum circuit layers by replacing quantum tensors with so-called "spiders", nodes on a graph with edges that connect them. ZX calculus can replace matrix multiplication of quantum elements with easy-to-apply graphical rules. Using the languages simplification rules for fusing interconnected spiders, a variational quantum circuit may be reduced in complexity, such as to assess an effective complexity of the variational quantum circuit. In case the effective variational parameters of the simplified circuit deviate significantly from the number of variational parameters of the original quantum circuit, the quantum circuit layer may be inefficient.

Fisher information can provide information on the uniformity of the training of the model by weights, the optimal depth in terms of parameterization of excess, and/or the depth that provides the best learning ability. Generally, in supervised machine learning, the objective is to devise a hypothesis model, $h_\theta(x')$, which can approximate the natural distribution of data, $f_\theta(x)$, based on a given subset of labeled data points. The conditional probability, $P(y|x, \theta)$, represents the likelihood of obtaining the label y given the data point x and the model parameters $\theta$. However, to achieve a more precise understanding, the joint probability, $P(y, x|\theta)$, which takes into account the combined likelihood of y and x given $\theta$, can be instructive. The Fisher Information Matrix introduces a metric over this N-dimensional manifold, with N being the total number of trainable parameters, and can be mathematically represented as in Eq (1) as

$$F(\boldsymbol{\theta}) = \mathbb{E}_{\{x_i, y_i\}}\left[\boldsymbol{\nabla}_{\boldsymbol{\theta}} \log(P) \boldsymbol{\nabla}_{\boldsymbol{\theta}} \log(P)^T\right]$$

although it may also be represented in terms of the Variance of the expression, as opposed to the expectation value.

Diagonalizing this matrix offers a tangential basis that is locally Euclidean, with its diagonal values yielding the squared gradient of the joint probability in this diagonalized space. These values are extractable by computing the eigenvalues of the Fisher matrix.

As the depth (e.g. number of layers) of the quantum circuit increases, the rank of the Fisher matrices may also grow until it reaches a point of saturation. This saturation point or plateau indicates the optimal depth concerning overparameterization. If the rank plateaus from the beginning, the minimal depth becomes the most efficient choice, highlighting the need for careful depth selection to prevent unnecessary training complexities. By further assessing the eigenspectrum of the normalized Fisher information, the trainability of different depths can be investigated. A higher degeneracy of eigenvalues around zero can correspond to reduced trainability. Therefore, by comparing the spectra for varying depths, it can be possible to identify the depth that offers the best trainability.

The Gradient analysis may enable the detection of a Barren plateau phenomenon. An indicator characterizing a barren plateau was found to be the variance of the gradient of the loss function. The method may involve calculating the gradient variance to gradually increase the number of qubits and thus determine whether the gradient decreases exponentially. This diagnostic capability facilitates a preliminary assessment of the quality and learnability of a quantum circuit before starting potentially computationally intensive learning processes, ensuring that the selected circuit contributes to the effective application of quantum machine learning.

The circuit metrics may be used to automatically discard ineffective quantum circuits, such as to optimally use the underlying processing resources.

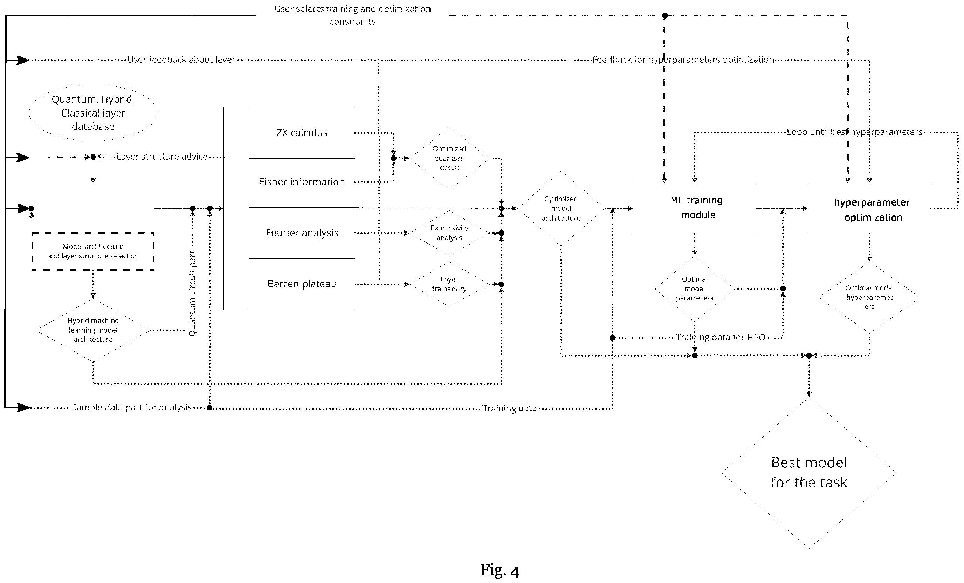

Fig. 4 illustrates a schematic flow diagram of an example method for constructing an optimized quantum circuit based machine learning model based on a quantum circuit architecture selection of a user, which can include training and optimization constraints as well as a quantum circuit architecture for implementing a variational quantum circuit.

The user may be prompted for feedback on quantum circuit architecture parameters and training hyperparameters, and may be presented with circuit metrics for the quantum circuit architecture selection, e.g. based on recommended quantum circuit architecture parameters, default quantum circuit architecture parameters, a random selection of quantum circuit architecture parameters based on the quantum circuit architecture parameter range(s) selected by the user, or based on selected quantum circuit architecture parameters, e.g. center values from selected quantum circuit architecture parameter range(s).

The quantum circuit architecture parameters may include the number of qubits for the selected quantum circuit architecture, the depth of the variational quantum circuit, e.g. the number of variational layers 24, the encoding strategy, the number of measured qubits, or the like. In some examples, the quantum circuit architecture parameter specifies an employed quantum circuit architecture, such as a specific arrangement of quantum gates, and a corresponding quantum circuit architecture parameter range may include a plurality of different quantum circuit architectures.

Subsequently, a processing system can be instructed to generate a plurality of random quantum circuits based on the quantum circuit architecture parameter range(s), e.g. by randomly selecting a combination of quantum circuit architecture parameters each selected from a corresponding quantum circuit architecture parameter range and constructing a corresponding plurality of quantum circuits for the (randomly) selected quantum circuit architecture parameters.

For each of the random quantum circuits, the processing system may investigate circuit metrics indicating the suitability of the quantum circuits for the machine learning task, and may train machine learning models based on a subset of the random quantum circuits meeting a metric criterion for each of the circuit metrics. In some examples, the user may select a subset or all of the circuit metrics for evaluating the random quantum circuits.

The processing system may determine quality indicators for each of the selected circuit metrics to be compared to corresponding circuit metric thresholds. In case a random quantum circuit does not meet a metric criterion, e.g. the quality indicator does not meet a corresponding circuit metric threshold, the random circuit metric may be discarded. For example, the random quantum circuit may be skipped during a preliminary training and the user may be informed that the random quantum circuit has been skipped in addition to information on the violation of the circuit metric, e.g. what circuit metric criterion was violated and why the random quantum circuit did not pass the metric criterion.

For example, the user may be presented with a quantification of the efficiency of the circuit, determined based on Fourier analysis, e.g. determining the number of non-zero Fourier coefficients above a threshold (such as $10^{-3}$). The random quantum circuit may be skipped in case the fraction of non-zero Fourier coefficients is below a threshold fraction, e.g. 80%, 60% or 50%.

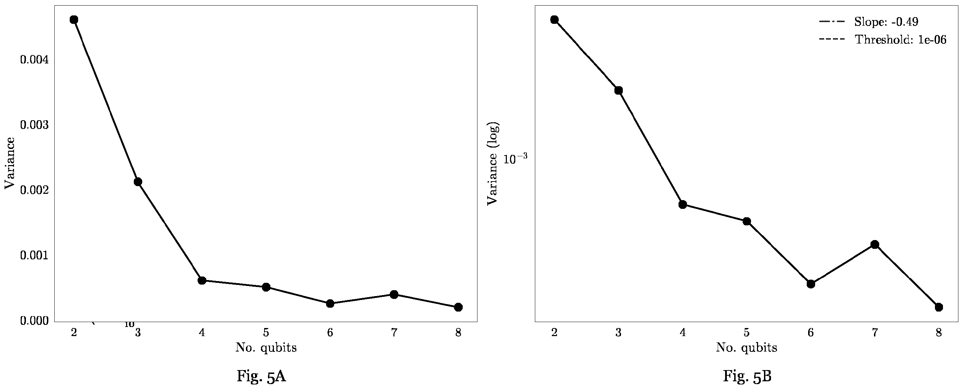

Figs. 5A and 5B illustrate an example of a variance of the gradient of the cost function of a variational quantum circuit as a function of the number of qubits, and the corresponding logarithm of the variance, respectively. A linear regression fit of the logarithm of the variance (Fig. 5B) has a sub-linear slope of -0.49, indicating a sub-exponential scaling of the gradient variance with increasing qubit number. Based on the linear regression fit, a processing system can estimate a maximum trainable qubit number at which the variance is smaller than a threshold value, which is selected as $10^{-6}$ in the illustrated example. If the qubit number of the random quantum circuit is above the maximum trainable qubit number, the quantum circuit may be rejected.

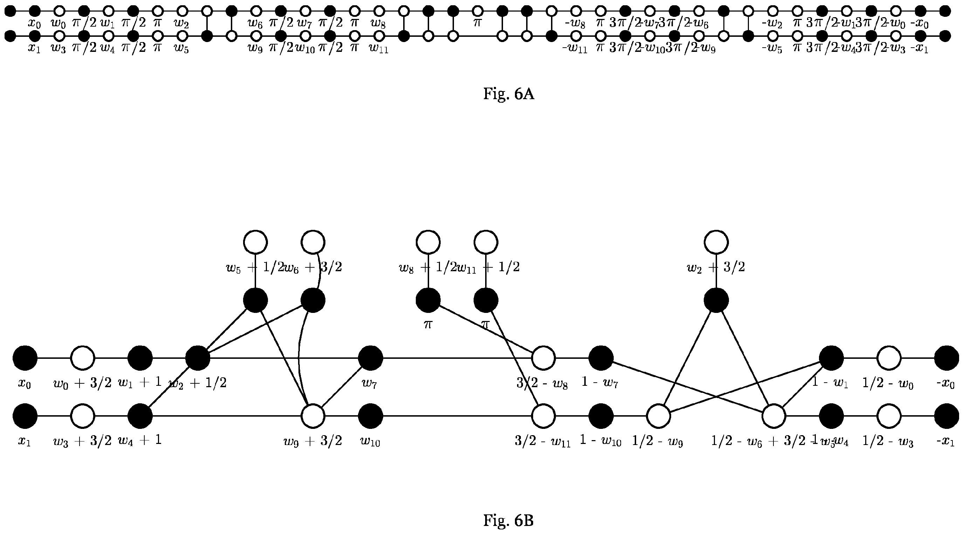

Figs. 6A and 6B illustrate ZX-calculus representations of a variational quantum circuit prior to and after rewriting (as a result of an algorithmic fusing of spiders representing the quantum tensors), respectively. The ZX-calculus's rewriting rules can be applied to simplify the circuit and remove redundancies. From the final graph, a simplified new circuit can be extracted, or the graph can be used to directly to infer which parameters are lost. Essentially, if the reduced ZX-form still has all the initial parameters on separate nodes, this would indicate that the model does not reduce away any of the inputs or trainable parameters, verifying that all the weights and input data in the circuit make an impact on the final result. On the other hand, if the simplified circuit features less parameters, the random quantum circuit may inefficiently utilize the variational parameters and/or input features.

The processing system may determine the fraction of effectively variable parameters in the reduced circuit to the number of original variational parameters, ad may determine whether the fraction is smaller than a corresponding fraction threshold, e.g. 50% or 80%. If the fraction is below the threshold, the random quantum circuit may be skipped.

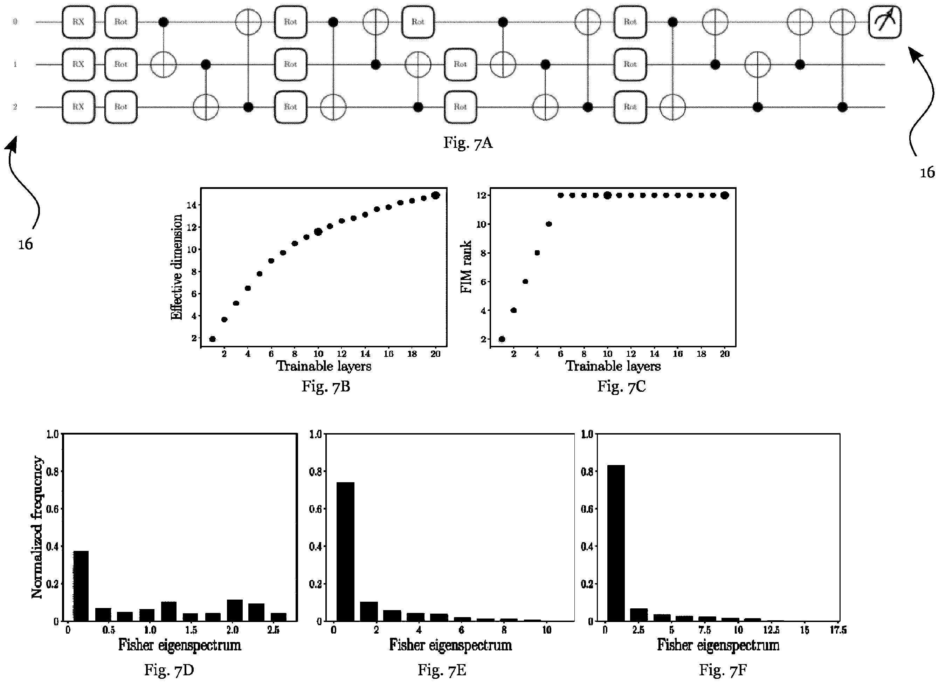

As a further example, Figs. 7A-7F illustrate an example of applying the Fisher information circuit metric as part of quantum circuit analysis. A quantum circuit architecture is exemplarily shown in Fig. 7A with three qubits (numbered 0-2), with a layer of Hadamard gates (RX) preparing superposed states, and a plurality of layers comprising single qubit rotations (Rot) and cyclic CNOT gates entangling the qubits (illustrated as closed and open circles connecting the control and target qubits). The first qubit ("0") is measured to determine an output of the variational quantum circuit. Fig. 7B illustrates a graph of the effective dimension of the Fisher information matrix (FIM) as a function of depth of the variational quantum circuit indicated by the number of trainable layers (combination of variational single qubit rotations and CNOT gates). Fig. 7C illustrates the rank of the Fisher information matrix as a function of the number of trainable layers. Figs. 7D-7F illustrate the eigenspectrum of the Fisher information matrix for 1, 10, and 20 trainable layers, respectively.

As can be seen in Fig. 7C, the rank of the FIM does not increase further after 6 trainable layers, but saturates, indicating that the addition of further layers does not increase the rank of the Fisher information matrix (and the increase in the effective dimension is only logarithmic, see Fig. 7B) so above this point the model may be overparameterized.

The processing system may evaluate, for the random quantum circuit, while varying the depth of the random quantum circuit and keeping the other quantum circuit architecture parameters fixed, the smallest number of layers above which the FIM rank does not increase as a maximum layer number for the random quantum circuit, and may discard the random quantum circuit, if the number of layers is greater than the maximum layer number for the random quantum circuit.

Figs. 7D-7F illustrate an increase of the degeneracy of the eigenvalues with increasing depth of the model based on an increase of the height of the first bin in the Fisher eigenspectrum. The larger the first bin in the Fisher eigenspectrum, the smaller may be the ratio of the contributing parameters. The processing system may determine the Fisher information matrix eigenspectrum for the random quantum circuit, and, as a metric criterion, may evaluate the value of the first bin and determine whether the first bin meets or exceeds a corresponding first degeneracy threshold value, and/or may evaluate the value of the second bin and determine whether the second bin meets or is below a corresponding second degeneracy threshold value, and discard the random quantum circuit if the corresponding metric criterion is not met.

In some examples, the processing system determines the Fisher information matrix eigenspectrum for the random quantum circuit, while varying the depth of the random quantum circuit and keeping the other quantum circuit architecture parameters fixed, to determine a maximum depth of the random quantum circuit. For example, the processing system may evaluate the value of the first bin of the eigenspectrum for different depth values and determine the value of the depth for the random quantum circuit at which the first bin first meets or exceeds a corresponding first degeneracy threshold value, and/or may evaluate the value of the depth for the random quantum circuit at which the value of the second bin first meets or is below a corresponding second degeneracy threshold value. As a metric criterion, the processing system may discard the random quantum circuit if the depth exceeds the maximum depth, based on the determined depth(s) at which the first (second) bin first violates the corresponding degeneracy threshold value.

The subset of random quantum circuits meeting the circuit metric criteria may be considered to have an optimized model architecture, and may be trained based on a subset of the problem data to determine a quality metric achieved with each random quantum circuit. The random quantum circuit(s) achieving the highest quality metric when approximating the problem data may be presented to the user. In some examples, the processing unit determines, based on the circuit metrics determined for the random quantum circuits, a recommendation for adapting the quantum circuit architecture parameter range(s), e.g. in case the maximum depth of the quantum circuit architecture parameter range is too low in view of an optimal depth of the circuit.

The random quantum circuits meeting the circuit criterion(s) can be maintained as validated quantum circuit candidates.

Machine learning models corresponding to the validated quantum circuit candidates may be trained on the problem data. The method may determine the best hyperparameter configuration for the machine learning models that minimizes (maximizes) the selected quality metric of the machine learning model (e.g. mean squared error). The user can set the range in which to select hyperparameter values. In some examples, a plurality of unique combinations of hyperparameters are determined and preliminarily trained to test the selected model(s) in order to identify the most successful configuration.

The result of the analysis may be a set of optimal values of hyperparameters, which may accompanied by the value of a quality metric quantifying a measure of how well the quantum circuit based machine learning model approximates the problem data.

In some examples, the hyperparameter optimization step and the determination of the quality metric for the validated quantum circuit candidates may be looped to determine the validated quantum circuit candidate(s) achieving the best quality metric for predicting (e.g. a test portion of) the problem data.

The processing system may return an optimized set of quantum circuit architecture parameters optionally in combination with optimized hyperparameters to a user. The optimized set of quantum circuit architecture parameters may be based on a quality metric achieved by the validated quantum circuit candidates when trained based on the problem data. In some examples, the processing system may be configured to train the resulting quantum circuit layer with the optimal set of quantum circuit architecture parameters with the determined set of hyperparameters based on the problem data, and may return the resulting trained quantum circuit layer to the user.

The description of the preferred embodiments and the figures merely serve to illustrate the invention and the beneficial effects associated therewith, but should not be understood to imply any limitation. The scope of the invention is to be determined solely by the appended claims.

LIST OF REFERENCE SIGNS

to   system
12   qubit register
14   plurality of quantum gates
16   measurement sensors
18   control system
20   layers of quantum gates
22   encoding layer
24   variational layer
26   sub-vector of input data

**Claims**

1. A computer-implemented method for constructing a quantum circuit-based machine learning model to estimate an output for a set of input features based on problem data, said method comprising the steps of:

   receiving a quantum circuit architecture selection, the quantum circuit architecture selection including a selection of a quantum circuit architecture parameter range for specifying a property of a quantum circuit layer of the machine learning model, the quantum circuit layer comprising a plurality of quantum gates acting on qubits, wherein the quantum gates comprise encoding gates for encoding an input feature in a quantum state of the qubits and variational quantum gates, whose action on the qubits is defined by variational parameters;
   sampling a plurality of random quantum circuits based on the quantum circuit architecture selection, wherein random quantum circuits are constructed based on a random selection of quantum circuit architecture parameters from the quantum circuit architecture parameter range;
   determining a circuit metric for each of the random quantum circuits, wherein the circuit metric is selected from the group of Fourier expressivity, ZX-calculus derived parameter redundancy, optimal circuit depth derived from Fisher information, and a maximum qubit number estimate based on a gradient variance for the random quantum circuit;

determining, based on the circuit metric for the random quantum circuits meeting a corresponding metric criterion, a subset of random quantum circuits as validated quantum circuit layer candidates;

training a plurality of machine learning models, each comprising one of the validated quantum circuit based layer candidates; and

Determining an optimized set of quantum circuit architecture parameters based on a quality metric achieved by the plurality of machine learning models.

2. The method of claim 1, wherein the quantum circuit architecture parameter range comprises one or more quantum circuit architecture parameters selected from the group of qubit number, variational quantum circuit depth, number of input features, and number of measured qubits for constructing an output of the variational quantum circuit.

3. The method of claim 1 or 2, wherein the method comprises determining a plurality of circuit metrics, in particular all of the circuit metrics, from the group of Fourier expressivity, ZX-calculus derived parameter redundancy, optimal circuit depth derived from Fisher information, and a maximum qubit number estimate based on gradient variance for the random circuit and/or a set of default quantum circuit architecture parameters for the quantum circuit architecture selection.

4. The method of any one of the preceding claims, wherein determining the Fourier expressivity comprises determining Fourier coefficients of a partial Fourier series representation for the random quantum circuit, and determining a number of the Fourier coefficients above an expressivity threshold for the Fourier coefficients.

5. The method of any one of the preceding claims, wherein determining the ZX-calculus derived parameter redundancy comprises determining a ZX-calculus representation for the random quantum circuit, executing a circuit simplification algorithm on the ZX-calculus representation for obtaining a reduced ZX-graph for the random quantum circuit, and determining a number of unique parameters in the reduced ZX-graph.

6. The method of any one of the preceding claims, wherein determining the optimal circuit depth derived from Fisher information comprises determining the Fisher information matrix for one of the random quantum circuit instantiated with randomly selected variational parameters for a subset of the problem data, while varying a variational quantum circuit depth of the random quantum circuit.

7. The method of claim 6, wherein the method further comprises determining a rank of the Fisher information matrix for multiple depths of the random quantum circuit and determining the depth at which the rank of the Fisher information matrix saturates; and/or

wherein the method further comprises determining an eigenspectrum of the Fisher information matrix, and determining, based on a frequency of smallest eigenvalues in a bin of the eigenspectrum, an optimal depth of the random quantum circuit.

8. The method of any one of the preceding claims, wherein determining the maximum qubit number estimate based on gradient variance comprises randomly sampling the gradient of the variational parameters for the random quantum circuit multiple times and for a plurality of numbers of qubits, and determining the maximum qubit number at which the variance of the gradient of the variational parameters is at or below a pre-determined weight gradient variance threshold.

9. The method of claim 8, wherein determining the maximum qubit number at which the variance of the gradient of the variational parameters is at or below a pre-determined weight gradient variance threshold comprises determining the variance of the gradient of the variational parameters for the random quantum circuit for the plurality of numbers of qubits, and fitting the logarithm of the variance with a linear regression model to determine the maximum qubit number at which the variance of the gradient of the variational parameters is at or below a pre-determined weight gradient variance threshold.

10. The method of any one of the preceding claims, wherein the quantum circuit architecture parameter range is based on a quantum circuit architecture parameter selection of a user, wherein the method comprises receiving an end point of the quantum circuit architecture parameter range and/or generating the quantum circuit architecture parameter range based on a selected quantum circuit architecture parameter or a default quantum circuit architecture parameter for the quantum circuit architecture selection.

11. The method of any one of the preceding claims, wherein the plurality of machine learning models is trained based on a subset of the problem data prior to determining the optimized set of quantum circuit architecture parameters; and/or wherein the method further comprises training a machine learning model with the optimized set of quantum circuit architecture parameters based on the problem data.

12. The method of any one of the preceding claims, wherein the method further comprises, returning, based on the circuit metric for the quantum circuit architecture selection, a recommendation to a user to adjust the quantum circuit architecture parameter range.

13. The method of any one of the preceding claims, wherein the method comprises receiving a plurality of quantum circuit architecture parameter ranges as part of the quantum circuit architecture selection; and/or wherein the quantum circuit architecture selection comprises an arrangement of quantum gates in the quantum circuit layer parametrized by the quantum circuit architecture parameters.

14. A system for constructing a quantum circuit-based machine learning model to estimate an output for a set of input features based on problem data, the system comprising a processing system configure to:

   receiving a quantum circuit architecture selection, the quantum circuit architecture selection including a selection of a quantum circuit architecture parameter range for specifying a property of a quantum circuit layer of the machine learning model, the quantum circuit layer comprising a plurality of quantum gates acting on qubits, wherein the quantum gates comprise encoding gates for encoding an input feature in a quantum state of the qubits and variational quantum gates, whose action on the qubits is defined by variational parameters;
   sample a plurality of random quantum circuits based on the quantum circuit architecture selection, wherein random quantum circuits are constructed based on a random selection of quantum circuit architecture parameters from the quantum circuit architecture parameter range;
   determine a circuit metric for each of the random quantum circuits, wherein the circuit metric is selected from the group of Fourier expressivity, ZX-calculus derived parameter redundancy, optimal circuit depth derived from Fisher information, and a maximum qubit number estimate based on a gradient variance for the random quantum circuit;
   determine, based on the circuit metric for the random quantum circuits meeting a corresponding metric criterion, a subset of random quantum circuits as validated quantum circuit layer candidates;
   train a plurality of machine learning models, each comprising one of the validated quantum circuit based layer candidates; and
   determine an optimized set of quantum circuit architecture parameters based on a quality metric achieved by the plurality of machine learning models.

15. A computer program comprising machine readable instructions, which when executed by a processing system implement the method according to any one of claims 1-13 or the system according to claim 14.

Fig. 1

Fig. 2

receiving a quantum circuit architecture selection including a selection of a quantum circuit architecture parameter range for specifying a property of a quantum circuit layer — S10

sampling a plurality of random quantum circuits based on the quantum circuit architecture selection — S12

determining a circuit metric for each of the random quantum circuits — S14

determining, based on the circuit metric for the random quantum circuits meeting a corresponding metric criterion, a subset of random quantum circuits as validated quantum circuit layer candidates — S16

training a plurality of machine learning models, each comprising one of the validated quantum circuit based layer candidates — S18

determining an optimized set of quantum circuit architecture parameters based on a quality metric achieved by the plurality of machine learning models — S20

Fig. 3

Fig. 4

Fig. 5A

Fig. 5B

Fig. 6A

Fig. 6B

Fig. 7A

Fig. 7B

Fig. 7C

Fig. 7D

Fig. 7E

Fig. 7F

Europäisches Patentamt

European Patent Office

Office européen des brevets

## EUROPEAN SEARCH REPORT

**Application Number**

EP 24 18 2888

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ASEL SAGINGALIEVA ET AL: "Hybrid quantum ResNet for car classification and its hyperparameter optimization", ARXIV.ORG, CORNELL UNIVERSITY LIBRARY, 201 OLIN LIBRARY CORNELL UNIVERSITY ITHACA, NY 14853, 29 September 2023 (2023-09-29), XP091626362, DOI: 10.1007/S42484-023-00123-2 * abstract * * page 1 - page 7 * * page 11 - page 15 * ----- | 1-15 | INV. G06N10/20 G06N10/60 G06N20/00 |
| A | MOHAMMAD PIRHOOSHYARAN ET AL: "Quantum Circuit Design Search", ARXIV.ORG, CORNELL UNIVERSITY LIBRARY, 201 OLIN LIBRARY CORNELL UNIVERSITY ITHACA, NY 14853, 4 January 2021 (2021-01-04), XP081850853, * abstract * ----- | 1-15 | |
| A | DARYA MARTYNIUK ET AL: "Quantum Architecture Search: A Survey", ARXIV.ORG, CORNELL UNIVERSITY LIBRARY, 201 OLIN LIBRARY CORNELL UNIVERSITY ITHACA, NY 14853, 10 June 2024 (2024-06-10), XP091784219, * abstract * * table 1 * ----- -/-- | 1-15 | TECHNICAL FIELDS SEARCHED (IPC) G06N |

The present search report has been drawn up for all claims

| Place of search | Date of completion of the search | Examiner |
|---|---|---|
| The Hague | 12 November 2024 | Bohn, Patrice |

EPO FORM 1503 03.82 (P04C01)

Europäisches
Patentamt

European
Patent Office

Office européen
des brevets

## EUROPEAN SEARCH REPORT

**Application Number**

EP 24 18 2888

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | SCHULD MARIA ET AL: "Effect of data encoding on the expressive power of variational quantum-machine-learning models", PHYSICAL REVIEW A, vol. 103, no. 3, 24 March 2021 (2021-03-24), XP093119144, ISSN: 2469-9926, DOI: 10.1103/PhysRevA.103.032430 Retrieved from the Internet: URL:https://journals.aps.org/pra/pdf/10.1103/PhysRevA.103.032430> * abstract * * Sections I-III * ----- | 1,3,4,14 | |

TECHNICAL FIELDS SEARCHED (IPC)

The present search report has been drawn up for all claims

| Place of search | Date of completion of the search | Examiner |
|---|---|---|
| The Hague | 12 November 2024 | Bohn, Patrice |

EPO FORM 1503 03.82 (P04C01)